(19) **Europäisches Patentamt**

**European Patent Office**

**Office européen des brevets**

(11) **EP 1 099 281 B1**

(12) **FASCICULE DE BREVET EUROPEEN**

(45) Date de publication et mention
de la délivrance du brevet:
**23.04.2003   Bulletin 2003/17**

(51) Int Cl.⁷: **H01S 3/08**

(21) Numéro de dépôt: **99929443.2**

(22) Date de dépôt: **08.07.1999**

(86) Numéro de dépôt international:
**PCT/FR99/01663**

(87) Numéro de publication internationale:
**WO 00/005789 (03.02.2000 Gazette 2000/05)**

(54) **OSCILLATEUR LASER A CAVITES MULTIPLES**

**LASERRESONATOR MIT MEHRFACHKAVITÄT**

**LASER OSCILLATOR WITH MULTIPLE CAVITIES**

(84) Etats contractants désignés:
**DE GB**

(30) Priorité:  **23.07.1998  FR 9809422**

(43) Date de publication de la demande:
**16.05.2001   Bulletin 2001/20**

(73) Titulaire: **Systeme Optronique Industriel
77123 Noisy sur Ecole (FR)**

(72) Inventeurs:
• **COTTIN, Patrice
F-77123 Noisy sur Ecole (FR)**
• **LESCROART, Guillaume
F-77000 Le Mans (FR)**
• **BOURDET, Gilbert
F-91440 Bures sur Yvette (FR)**

(74) Mandataire: **Jacobson, Claude et al
Cabinet Lavoix
2, Place d'Estienne d'Orves
75441 Paris Cedex 09 (FR)**

(56) Documents cités:
**DE-A- 3 148 905          DE-A- 4 300 700
US-A- 4 221 468**

**Description**

L'invention est relative à un oscillateur laser à cavités multiples, un miroir pour un tel oscillateur, un procédé de fabrication de ce miroir et un laser comportant un tel oscillateur.

L'énergie fournie par un laser dépend essentiellement du volume du milieu amplificateur exploité par un mode laser qui s'y propage. Par conséquent, plus le mode laser est large, mieux est exploité le volume disponible du milieu amplificateur.

On peut obtenir des modes laser de grandes dimensions transversales en allongeant par exemple la cavité.

Toutefois, si la largeur du mode est augmentée, l'allongement de la cavité ne peut permettre de mieux exploiter le milieu amplificateur que si le rapport entre la longueur de la cavité et la largeur du mode laser reste constant, car la stabilité d'un mode laser dépend de la diffraction que celui-ci subit sur un aller-retour dans la cavité.

En conséquence, la solution consistant à allonger la cavité laser conduit à des ensembles laser encombrants, mécaniquement instables et difficiles à alimenter en énergie.

De plus, si dans une telle cavité allongée, l'excitation du milieu amplificateur est optimisée, le gain que le mode laser a acquis au cours d'un aller retour, peut provoquer l'apparition de modes laser transverses qui sont gênants du fait qu'ils ne permettent pas de réaliser des taches focales de petites dimensions.

En outre, si le mode laser au sein du milieu amplificateur présente des dimensions larges, des problèmes liés au refroidissement du milieu amplificateur deviennent critiques.

Par ailleurs, on connaît des lasers dans lesquels sont associées plusieurs cavités en parallèle, par exemple par guidage dans un réseau carré ou autofocalisant de guides. Chaque guide individuel supporte un mode élémentaire qui est couplé aux modes des autres cavités par exemple par filtrage.

Du document DE-43 00 700, on connait un laser $CO_2$ à plaques équipé d'un oscillateur laser comprenant une rangée de plusieurs cavités d'axes parallèles et stables dans un plan parallèle aux axes de la rangée de cavités. Les cavités stables sont couplées entre elles par diffusion sur des bords vifs des miroirs des cavités.

Cette solution présente l'inconvénient que le couplage entre deux cavités stables ne peut pas bien être maîtrisé.

DE-A-3 148 905 décrit un miroir qui comporte une face présentant un motif d'éléments de miroir formé d'une part des portions creuses 11 et d'autre part des portions bombées et convexes 12 disposées respectivement entre deux portions creuses. Selon DE-A-3 148 905, ce miroir est combiné avec un miroir plan de sortie pour former un oscillateur laser à cavités multiples

L'invention vise à proposer un oscillateur laser à cavités multiples comprenant une rangée de plusieurs cavités d'axes parallèles et stables au moins dans un plan parallèle aux axes de la rangée de cavités et dont le couplage entre deux cavités stables puisse être maîtrisé de manière satisfaisante.

A cet effet, l'invention selon la revendication 1 a pour objet un oscillateur laser à cavités multiples, comprenant une rangée d'au moins deux cavités d'axes parallèles et stables dans au moins un plan parallèle aux axes des cavités de ladite rangée, et des moyens de couplage de lumière entre lesdites au moins deux cavités stables, caractérisé en ce que lesdits moyens de couplage comprennent chacun une cavité instable, parallèle auxdites au moins deux cavités stables et disposée dans ladite rangée entre celles-ci.

L'oscillateur selon l'invention comporte de plus les caractéristiques suivantes :

- l'oscillateur comprend un miroir plan de sortie et un miroir sensiblement totalement réfléchissant et comportant sur sa face en regard du miroir plan de sortie un motif d'éléments de miroir formé d'une part de portions creuses définissant avec ledit miroir plan de sortie ladite rangée de cavités stables et d'autre part de portions bombées disposées respectivement entre deux portions creuses et définissant avec ledit miroir plan de sortie lesdites cavités instables de couplage de deux cavités stables voisines,

- pour générer en sortie un faisceau laser dont l'amplitude est sensiblement la somme de 2*N modes laser élémentaires fondamentaux de profil transversal gaussien, 2*N étant le nombre desdites portions creuses, ledit motif d'éléments de miroir possède dans ladite direction transversale de la rangée de cavités un profil $\Delta$ donné par la formule suivante :

$$\Delta(x) = \frac{\lambda}{2\pi} * \phi(x)$$

où $\lambda$ est la longueur d'onde de la lumière et $\phi(x)$ est une variation de phase en fonction de la direction transversale x du miroir et est extraite de l'équation suivante :

$$A(x) = A_0 \sum_{j=1}^{N} \left[ \exp\left( -\frac{(x - jd/2)^2}{w^2} \right) \exp\left( -ik\frac{(x - jd/2)^2}{R} \right) + \exp\left( -\frac{(x + jd/2)^2}{w^2} \right) \exp\left( -ik\frac{(x + jd/2)^2}{R} \right) \right]$$

qui est un nombre complexe de la forme :

$$A(x) = A_0 B(x)\exp(-i\phi(x))$$

où $A_0{}^*B(x)$ est le module et $\phi(x)$ la phase recherchée de ce nombre complexe A(x),
j est un nombre naturel allant de 1 à N, i est le nombre imaginaire, d est la distance entre les centres de deux modes laser élémentaires de profil gaussien voisins, et k est le nombre d'onde k = $2\pi/\lambda$,

$$w^2 = w_0^2\left( 1 + \frac{L^2}{Z_R^2} \right)$$

$$R = L\left( 1 + \frac{Z_R^2}{L^2} \right)$$

où $w_0$ est le rayon de col d'un des modes laser élémentaires de profil transversal gaussien, L étant la longueur de la cavité et

$$Z_R = \frac{\pi w_0^2}{\lambda}.$$

L'invention a également pour objet un miroir selon la revendication 3 pour un oscillateur laser tel que défini ci-dessus, caractérisé en ce qu'il comporte une face sensiblement totalement réfléchissante présentant un motif d'éléments de miroir formé d'une part des portions creuses destinées à définir, avec un miroir plan de sortie, ladite rangée de cavités stables et d'autre part des portions bombées disposées respectivement entre deux portions creuses et destinées à définir, avec ledit miroir plan de sortie, lesdites cavités instables de couplage de deux cavités stables voisines.

Le miroir selon l'invention comporte de plus caractéristiques suivantes :

- pour obtenir avec un miroir plan correspondant 2*N modes laser élémentaires fondamentaux de profil transversal gaussien, 2*N étant le nombre desdites portions creuses, le profil $\Delta$ transversal gravé du motif d'éléments de miroir, est donné par la relation suivante :

$$\Delta(x) = \frac{\lambda}{2\pi} * \phi(x)$$

où $\lambda$ est la longueur d'onde de la lumière et $\phi(x)$ est une variation de phase en fonction de la direction transversale x du miroir et est extraite de l'équation suivante :

$$A(x) = A_0 \sum_{j=1}^{N} \left[ \begin{array}{l} \exp\left(-\dfrac{(x-jd/2)^2}{w^2}\right) \exp\left(-ik\dfrac{(x-jd/2)^2}{R}\right) + \\ \exp\left(-\dfrac{(x+jd/2)^2}{w^2}\right) \exp\left(-ik\dfrac{(x+jd/2)^2}{R}\right) \end{array} \right]$$

qui est un nombre complexe de la forme :

$$A(x) = A_0 B(x)\exp(-i\phi(x))$$

où $A_0{}^*B(x)$ est le module et $\phi(x)$ la phase recherchée de ce nombre complexe A(x), j est un nombre naturel allant de 1 à N, i est le nombre imaginaire, d est la distance entre les centres de deux modes laser élémentaires de profil gaussien voisins, et k est le nombre d'onde $k = 2\pi/\lambda$,

$$w^2 = w_0^2\left(1 + \frac{L^2}{Z_R^2}\right)$$

$$R = L\left(1 + \frac{Z_R^2}{L^2}\right)$$

où $w_0$ est le rayon de col d'un des modes laser élémentaires de profil transversal gaussien, L étant la longueur de la cavité et

$$Z_R = \frac{\pi w_0^2}{\lambda}.$$

En outre, l'invention a pour objet un procédé de fabrication du miroir tel que défini ci-dessus, caractérisé en ce que l'on grave dans une face sensiblement totalement réfléchissante d'un miroir plan, par l'intermédiaire d'un faisceau d'ions, selon ledit profil $\Delta$, ledit motif d'éléments de miroir formé des portions creuses destinées à définir, avec un miroir plan de sortie, ladite rangée de cavités stables et d'autre part des portions bombées disposées respectivement entre deux portions creuses et destinées à définir, avec ledit miroir plan de sortie, lesdites cavités instables de couplage de deux cavités stables voisines.

L'invention a également pour objet un laser, selon la revendication 6 caractérisé en ce qu'il comprend un oscillateur laser à cavités multiples tel que défini ci-dessus et un milieux amplificateur disposé dans ledit oscillateur.

Le laser selon l'invention peut de plus comporter une ou plusieurs des caractéristiques suivantes :

- le milieu amplificateur est un mélange gaz, notamment du gaz $CO_2$, disposé entre deux électrodes en forme de plaque , parallèles à ladite rangée de cavités et séparées d'un intervalle prédéfini pour former un guide d'onde pour les modes laser se propageant dans le milieu amplificateur,
- le milieu amplificateur est un solide, notamment une tranche sensiblement rectangle d'une matrice critalline contenant un dopant laser et dont les grandes faces forment pour les modes laser se propageant dans le milieu amplificateur un guide d'onde par réflexion totale.

D'autres caractéristiques et avantages de l'invention ressortiront de la description suivante, donnée à titre d'exemple, sans caractère limitatif, en regard des dessins annexés sur lesquels :

La figure 1 montre un schéma simplifié en perspective d'un laser comportant un oscillateur laser selon l'invention,
La figure 2 représente une vue en coupe suivant la ligne II-II de la figure 1,
La figure 3 représente un graphique montrant un premier exemple d'un profil de surface du motif d'éléments de miroir gravé dans le miroir selon l'invention,

La figure 4 représente un graphique montrant un second exemple d'un profil de surface du motif d'éléments de miroir gravé dans le miroir selon l'invention,

La figure 5 représente un graphique montrant les profils transverses théorique et expérimental de l'intensité en champ proche d'un faisceau en sortie d'un laser selon l'invention, et

La figure 6 représente un graphique montrant les profils transverses théorique et expérimental de l'intensité en champ lointain d'un faisceau en sortie d'un laser selon l'invention.

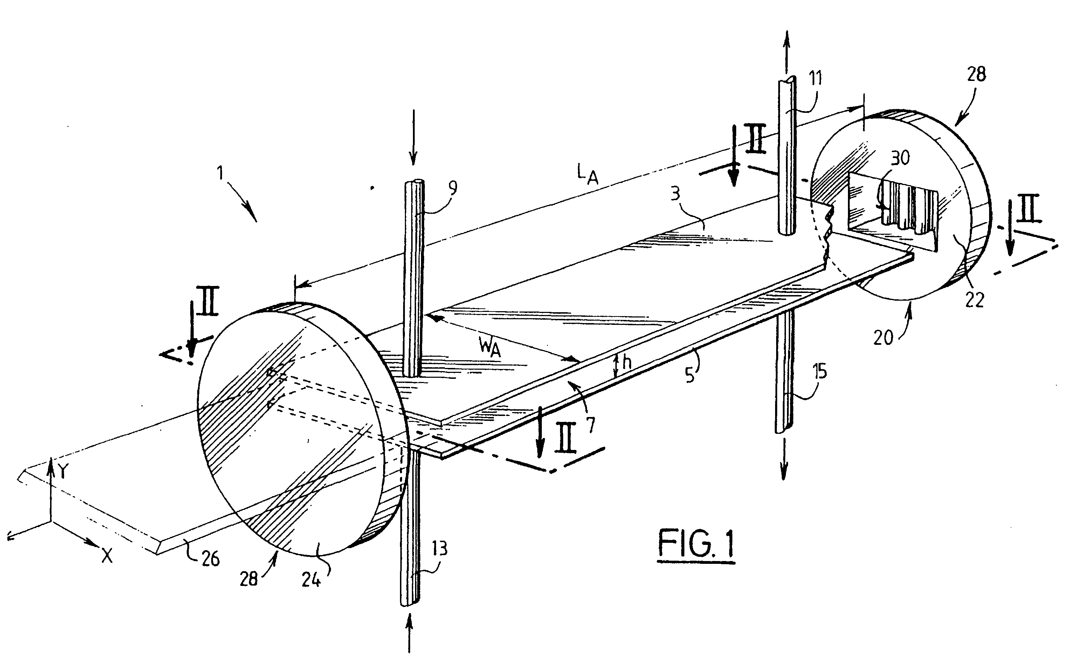

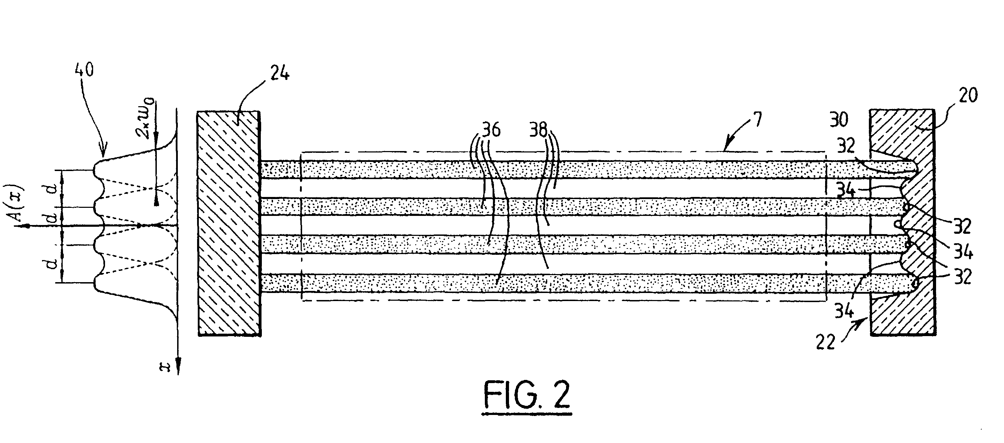

Sur les figures 1 et 2 est représenté de façon schématique un laser 1 à plaques dont le milieu amplificateur est par exemple comprenant du $CO_2$ confiné dans une enceinte non représentée (pour des caractéristiques classiques d'un laser à plaques, on se rapportera par exemple à l'article de S. Yatsiv, "Conductively cooled capacitively coupled RF excited $CO_2$ lasers", conférence lors du 6ème Symposium International Gas Flow and Chemical Lasers, Jerusalem, 8-12 septembre 1986).

Pour l'excitation du milieu amplificateur, ce laser 1 comprend deux électrodes 3 et 5 en forme de plaque et espacées d'un intervalle h définissant ainsi avec leurs faces en regard l'une de l'autre un canal 7 formant guide d'onde pour les modes laser se propageant dans le milieu amplificateur entre les électrodes 3 et 5. L'amplitude de ces modes est en cosinus.

Ainsi, le milieu amplificateur excité par les électrodes 3 et 5 possède la forme d'une tranche rectangle ayant par exemple les dimensions suivantes : longueur $L_A$= 520mm. largeur $W_A$ = 8mm et hauteur h = 2.5mm.

Chaque électrode 3. 5 est alimentée électriquement par l'intermédiaire de deux tubes métalliques creux respectivement 9 et 11 ainsi que 13 et 15 raccordés à un générateur de puissance haute fréquence non représenté pour exciter le milieu amplificateur dans le canal 7.

De plus, dans chaque électrode 3. 5 sont ménagés des canaux de circulation d'un liquide de refroidissement (non visibles sur les figures) qui sont raccordés par l'intermédiaire des tubes creux 9 et 11 ainsi que 13 et 15 à un circuit externe de refroidissement.

Selon une variante non représentée du laser, le milieu amplificateur peut également être formé d'une matrice critalline contenant un dopant laser, comme par exemple du Nd:YAG, Nd:YLF ou du Yb:YAG, en forme d'une tranche sensiblement rectangle de faible épaisseur de sorte qu'elle forme par réflexion interne totale sur ses grandes faces un guide d'onde pour les modes laser se propageant dans la tranche. Pour l'excitation de cette tranche par exemple en Nd:YAG, on prévoit un pompage optique par exemple par des diodes laser couplées optiquement à la tranche par un ou plusieurs condenseurs optiques disposés au niveau des petits côtés latéraux de la tranche de Nd:YAG.

En outre, comme on le voit sur la figure 1, le laser 1 comprend, disposés respectivement aux extrémités opposées du canal 7, deux miroirs 20 et 24 sensiblement parallèles, un miroir 20 dont la face 22 en regard des électrodes 3 et 5 est sensiblement totalement réfléchissante, et un miroir 24 de sortie d'un faisceau laser 26 sensiblement en forme d'un pinceau.

Sur la figure 1, on a également reporté un repère direct de coordonnées Selon ce repère, le faisceau laser 26 se propage selon la direction $\underline{Z}$, les miroirs 20 et 24 sont sensiblement parallèles à un plan contenant les axes $\underline{X}$ et $\underline{Y}$ du repère, et les électrodes 3 et 5 sont sensiblement parallèles à un plan contenant les axes $\underline{Z}$ et $\underline{X}$ du repère.

Ces deux miroirs 20 et 24 forment un oscillateur laser 28 qui supporte un mode fondamental stable de grande extension transversale comme cela sera expliqué plus loin.

Comme on le voit sur la figure 1 et plus particulièrement sur la figure 2 montrant l'oscillateur 28 en coupe transversale, le miroir 20 comprend sur sa face 22 un motif d'éléments de miroir 30 formé d'une part de portions creuses 32 et d'autre part de portions bombées 34 disposées respectivement entre deux portions creuses 32.

Aussi bien les portions creuses 32 que les portions bombées 34 présentent par exemple une forme cylindrique, les axes de cylindre des portions 32 et 34 étant parallèles entre eux et perpendiculaire à la fois à la direction de propagation $\underline{Z}$ du faisceau laser 26 et à la direction transverse du canal 7, c'est-à-dire à la direction $\underline{X}$ du repère défini ci-dessus.

Chaque portion creuse 32 définit avec le miroir plan 24 de sortie une cavité laser individuelle 36 (ce qui est illustré sur la figure 2 par des zones en gris) dans lequel un mode fondamental élémentaire peut se propager et dont l'axe longitudinal est parallèle à l'axe $\underline{Z}$ du repère direct défini ci-dessus. Le miroir 20 représenté sur les figures 1 et 2 comprend quatre portions creuses 32 définissant ainsi avec le miroir plan 24 de sortie une rangée de quatre cavités 36 individuelles dont les axes sont parallèles entre eux.

La courbure des portions cylindriques creuses 32 est choisie de telle façon que les cavités 36 sont stables au moins dans un plan parallèle aux axes des cavités 36 et permettent d'obtenir dans chaque cavité 36, avec le guide d'onde formé par les électrodes 3 et 5, la propagation d'un mode laser élémentaire à profil d'amplitude transversal sensiblement gaussien.

Chaque portion bombée 34 définit avec le miroir plan 24 de sortie une cavité laser individuelle instable 38 dont l'axe est également parallèle à la direction $\underline{Z}$ de propagation du faisceau laser 26 et qui sert à coupler en phase les modes fondamentaux se propageant dans deux cavités stables 36 voisines.

En d'autres termes, le miroir 20 définit avec le miroir 24 une rangée de cavités parallèles stables 36 et instables 38 disposées en alternance, les premières pour assurer la propagation de modes laser fondamentaux élémentaires à profil transversal sensiblement gaussien dans le milieu amplificateur excité, les secondes pour coupler en phase les cavités stables 36 entre lesquelles elles sont disposées de sorte que l'amplitude A(x) du faisceau laser en sortie possède, comme cela est indiqué schématiquement sur la figure 2 par le graphique 40, un profil transversal large composé de la somme des amplitudes de chaque mode laser fondamental à profil transversal gaussien. Bien entendu, les cavités d'extrémité de ladite rangée de cavités stables 36 et instables 38 disposées en alternance sont des cavités stables 36.

On comprend donc que le mode fondamental stable de grande extension transversale peut être associé à une somme de N modes élémentaires propres espacés d'une distance d et couplés entre eux par les cavités instables 38 (N étant un nombre entier supérieur à deux).

La longueur de la cavité $L_c$ est déterminée par la distance Rayleigh $Z_R$ pour chaque mode fontamental élémentaire et est proche de celle-ci.

Cette distance Rayleigh $Z_R$ est donnée par la relation suivante :

$$Z_R = \frac{\pi w_0^2}{\lambda}$$

où $w_0$ est le rayon du col au niveau du miroir de sortie 24.

Le motif 30 du miroir 20 est dimensionné de telle sorte que chaque mode laser fondamental d'une cavité stable individuelle 36 possède, en sortie, un rayon de col transversal $w_0$. c'est-à-dire une largeur transversale, (également appelé "waist" dans la technique) de taille prédéfinie, et les maximums d'intensité des modes laser fondamentaux, c'est-à-dire leurs centres respectifs, sont espacés les uns des autres d'une distance $\underline{d}$.

Avantageusement, on fabrique le miroir 20 d'après un procédé selon lequel on grave dans la face sensiblement totalement réfléchissante d'un miroir plan, par l'intermédiaire d'un faisceau d'ions, ledit motif d'éléments de miroir 30 formé des portions creuses 32 et des portions bombées 34. Ce procédé de gravure présente l'avantage de conserver l'état poli de la face gravée.

Plus particulièrement, pour obtenir un miroir 20 avec des portions creuses 32 et bombées 34, permettant d'obtenir avec un miroir plan 24 correspondant 2*N modes laser élémentaires fondamentaux de profil transversal gaussien couplés en phase. 2*N étant le nombre desdites portions creuses, le profil transversal gravé du motif 30, c'est-à-dire la profondeur $\Delta$ jusqu'à laquelle la matière du miroir plan à travailler doit être enlevée pour obtenir le motif d'éléments de miroir 30 souhaité, est donné par la relation suivante

$$\Delta(x) = \frac{\lambda}{2\pi} * \phi(x) \tag{1}$$

où $\lambda$ est la longueur d'onde de la lumière et $\phi(x)$ est une variation de phase en fonction de la direction transversale $\underline{x}$ du miroir 20. A l'état monté du miroir 20 dans un laser, la direction transversale $\underline{x}$ du miroir est parallèle à la direction $\underline{X}$ du repère droit défini ci-dessus.

La variation de phase $\phi(x)$ est extraite de l'équation suivante :

$$A(x) = A_0 \sum_{j=i}^{N} \left[ \exp\left( -\frac{(x - jd/2)^2}{w^2} \right) \exp\left( -ik\frac{(x - jd/2)^2}{R} \right) \div \atop \exp\left( -\frac{(x + jd/2)^2}{w^2} \right) \exp\left( -ik\frac{(x + jd/2)^2}{R} \right) \right] \tag{2}$$

qui est un nombre complexe de la forme :

$$A(x) = A_0 B(x) \exp(-i\phi(x)) \tag{3}$$

où $A_0*B(x)$ est le module et $\phi(x)$ la phase recherchée de ce nombre complexe A(x), j est un nombre naturel allant de 1 à N, i est le nombre imaginaire, d est la distance entre les centres de deux modes laser élémentaires de profil gaussien voisins, et k est le nombre d'onde k = 2π/λ,

$$w^2 = w_0^2 \left( 1 + \frac{L^2}{Z_R^2} \right) \qquad (4)$$

$$R = L \left( 1 + \frac{Z_R^2}{L^2} \right) \qquad (5)$$

où $w_0$ est le rayon de col d'un des modes laser élémentaires de profil transversal gaussien, L étant la longueur de la cavité et $Z_R$ est la distance Rayleigh définie ci-dessus.

Pour extraire φ(x), on résout l'équation (3) de manière numérique par ordinateur ce qui ne présente aucune difficulté particulière.

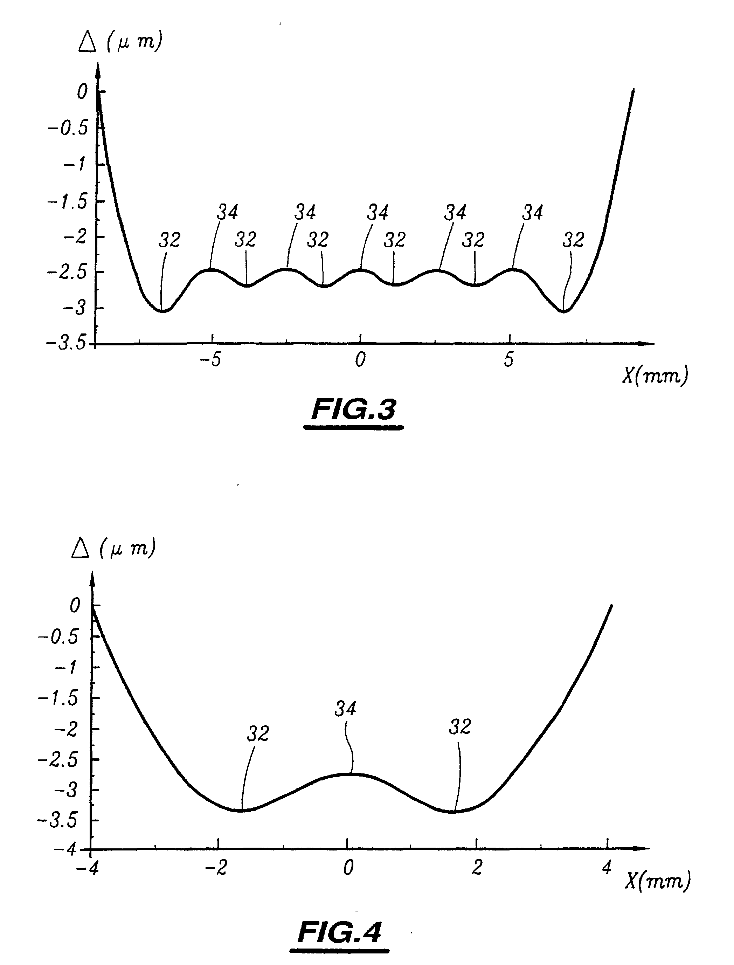

Deux exemples représentatifs de profils transversaux Δ (x) de motifs 30 gravés dans un miroir 20 sont respectivement représentés sur les figures 3 et 4.

Sur la figure 3 est représenté un premier exemple d'un profil transversal du motif d'éléments de miroir 30 selon l'axe x du miroir 20 comprenant six portions creuses 32 entre lesquelles sont disposées respectivement cinq portions bombées 34.

Sur la figure 4 est représenté un second exemple de profil transversal du motif d'éléments de miroir 30 selon l'axe x du miroir 20 comprenant deux portions creuses 32 entre lesquelles est disposée une portion bombée 34. Comme on le voit, il s'agit d'un profil continu de quelques micromètres de profondeur.

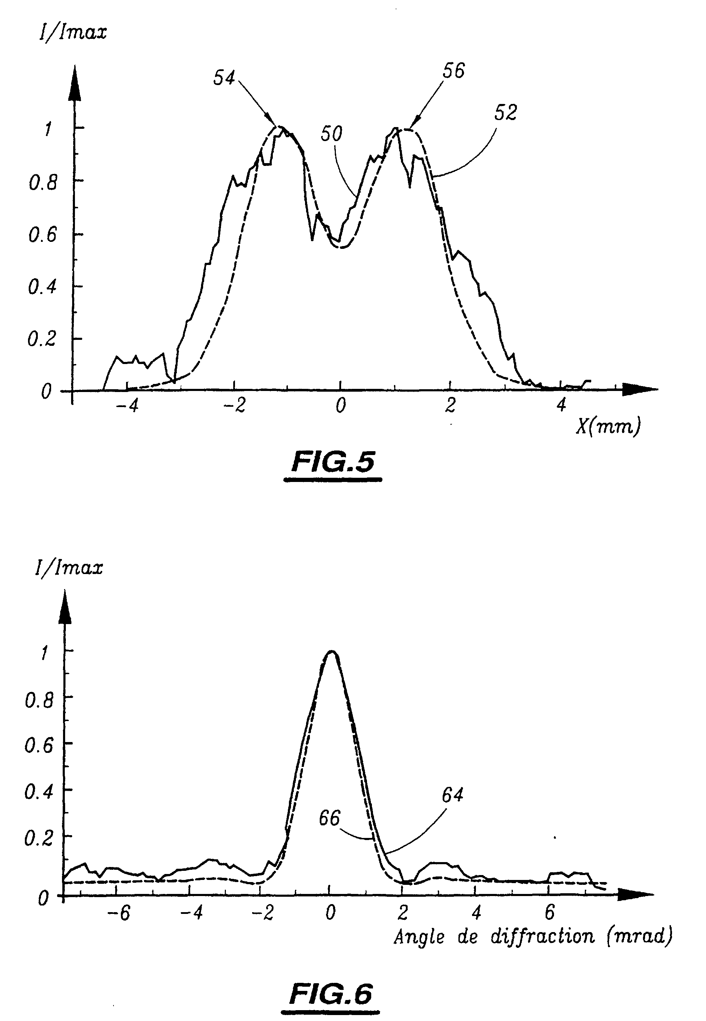

La figure 5 représente un graphique montrant l'intensité normalisée par l'intensité maximale en champ proche d'un faisceau en sortie d'un laser équipé d'un oscillateur laser 28 selon l'invention ayant un motif 30 tel que représenté sur la figure 4.

La courbe 50 représente un résultat expérimental et la courbe 52 une simulation numérique Ces courbes 50 et 52 présentent un accord satisfaisant. On voit donc que le faisceau de sortie en champ proche est large d'environ 6 mm dans la direction transversale X et résulte de la somme de deux modes laser élémentaires de type gaussien correspondant respectivement aux deux maxima d'intensité 54 et 56, et couplés de façon maîtrisée entre eux dans l'oscillateur 28.

La figure 6 représente un graphique montrant, en fonction de l'angle de diffraction, l'intensité normalisée en champ lointain du faisceau de la figure 5. La courbe 64 représente un résultat expérimental et la courbe 66 une simulation numérique. On voit clairement qu'un laser équipé d'un oscillateur selon l'invention permet d'obtenir en champ lointain un faisceau ayant un angle de diffraction petit, inférieur à 2 mrad.

De plus, l'oscillateur présente l'avantage d'être compact et mécaniquement stable.

Bien entendu, l'oscillateur 28 selon l'invention peut être modifié de multiples manières sans sortir du cadre de la présente invention.

## Revendications

1.   Oscillateur (28) laser à cavités multiples, comprenant une rangée d'au moins deux cavités (36) d'axes parallèles et stables dans au moins un plan parallèle aux axes des cavités de ladite rangée, et des moyens (38) de couplage de lumière entre lesdites au moins deux cavités stables (36), lesdits moyens de couplage comprenant chacun une cavité instable (38), parallèle auxdites au moins deux cavités stables (36) et disposée dans ladite rangée entre celles-ci, lesdites cavités stables et instables comprenant un miroir plan de sortie (24) et un miroir (20) sensiblement totalement réfléchissant et comportant sur sa face (22) en regard du miroir plan de sortie un motif d'éléments de miroir (30) formé d'une part de portions creuses (32) définissant avec ledit miroir plan de sortie (24) ladite rangée de cavités stables (36) et d'autre part de portions bombées (34) disposées respectivement entre deux portions creuses (32) et définissant avec ledit miroir plan de sortie (24) lesdites cavités instables (38) de couplage de deux cavités stables (36) voisines, **caractérisé en ce que** pour générer en sortie un faisceau laser (26) dont l'amplitude est sensiblement la somme de 2*N modes laser élémentaires fondamentaux de profil transversal gaussien, 2*N étant le nombre desdites portions creuses, ledit motif d'éléments de miroir (30) possède dans ladite direction transversale (X) de la rangée de cavités (36,38) un profil Δ donné par la formule suivante :

$$\Delta(x) = \frac{\lambda}{2\pi} * \phi(x)$$

où $\lambda$ est la longueur d'onde de la lumière et $\phi(x)$ est une variation de phase en fonction de la direction transversale x du miroir (20) et est extraite de l'équation suivante :

$$A(x) = A_0 \sum_{j=1}^{N} \left[ \exp\left(-\frac{(x - jd/2)^2}{w^2}\right) \cdot \exp\left(-ik\frac{(x - jd/2)^2}{R}\right) + \exp\left(-\frac{(x + jd/2)^2}{w^2}\right) \exp\left(-ik\frac{(x + jd/2)^2}{R}\right) \right]$$

qui est un nombre complexe de la forme

$$A(x) = A_0 B(x)\exp(-i\phi(x))$$

où $A_0*B(x)$ est le module et $\phi(x)$ la phase recherchée de ce nombre complexe A(x), j est un nombre naturel allant de 1 à N, i est le nombre imaginaire, d est la distance entre les centres de deux modes laser élémentaires de profil gaussien voisins, et k est le nombre d'onde k = $2\pi/\lambda$,

$$w^2 = w_0^2\left(1 + \frac{L^2}{Z_R^2}\right)$$

$$R = L\left(1 + \frac{Z_R^2}{L^2}\right)$$

où $w_0$ est le rayon de col d'un des modes laser élémentaires de profil transversal gaussien, L étant la longueur de la cavité et

$$Z_R = \frac{\pi w_0^2}{\lambda}$$

2. Oscillateur laser à cavités multiples selon la revendication 1, **caractérisé en ce que** lesdites portions bombées (34) et creuses (32) possèdent une forme cylindrique, les axes des cylindres étant perpendiculaires à un plan parallèle aux axes des cavités stables (36) de ladite rangée.

3. Miroir pour un oscillateur (28) selon l'une quelconque des revendications 1 et 2, le miroir comportant une face (22) sensiblement totalement réfléchissante présentant un motif d'éléments de miroir (30) formé d'une part des portions creuses (32) destinées à définir, avec un miroir plan de sortie (24), ladite rangée de cavités stables (36) et d'autre part des portions bombées (34) disposées respectivement entre deux portions creuses (32) et destinées à définir, avec ledit miroir plan de sortie (24), lesdites cavités instables (38) de couplage de deux cavités stables (36) voisines, **caractérisé en ce que** pour obtenir avec un miroir plan (24) correspondant 2*N modes laser élémentaires fondamentaux de profil transversal gaussien, 2*N étant- le nombre desdites portions creuses, le profil $\Delta$ transversal gravé du motif d'éléments de miroir (30), est donné par la relation suivante :

$$\Delta(x) = \frac{\lambda}{2\pi} * \phi(x)$$

où $\lambda$ est la longueur d'onde de la lumière et $\phi(x)$ est une variation de phase en fonction de la direction transversale x du miroir (20) et est extraite de l'équation suivante :

$$A(x) = A_0 \sum_{j=1}^{N} \left[ \begin{array}{l} \exp\left(-\frac{(x - jd/2)^2}{w^2}\right) \exp\left(-ik\frac{(x - jd/2)^2}{R}\right) + \\ \exp\left(-\frac{(x + jd/2)^2}{w^2}\right) \exp\left(-ik\frac{(x + jd/2)^2}{R}\right) \end{array} \right]$$

qui est un nombre complexe de la forme :

$$A(x) = A_0 B(x) \exp(-i\phi(x))$$

où $A_0^*B(x)$ est le module et $\phi(x)$ la phase recherchée de ce nombre complexe A(x), j est un nombre naturel allant de 1 à N, i est le nombre imaginaire, d est la distance entre les centres de deux modes laser élémentaires de profil gaussien voisins, et k est le nombre d'onde k = $2\pi/\lambda$,

$$w^2 = w_0^2 \left(1 + \frac{L^2}{Z_R^2}\right)$$

$$R = L\left(1 + \frac{Z_R^2}{L^2}\right)$$

où $w_0$ est le rayon de col d'un des modes laser élémentaires de profil transversal gaussien, L étant la longueur de la cavité et

$$Z_R = \frac{\pi w_0^2}{\lambda}$$

4. Miroir selon la revendication 3, **caractérisé en ce que** lesdites portions bombées (34) et creuses (32) possèdent une forme cylindrique, les axes des cylindres étant parallèles.

5. Procédé de fabrication d'un miroir laser selon la revendication 3, **caractérisé en ce que** l'on grave dans une face sensiblement totalement réfléchissante d'un miroir plan, par l'intermédiaire d'un faisceau d'ions, selon ledit profil $\Delta$, ledit motif d'éléments de miroir (30) formé des portions creuses (32) destinées à définir, avec un miroir plan de sortie (24), ladite rangée de cavités stables (36) et d'autre part des portions bombées (34) disposées respectivement entre deux portions creuses (32) et destinées à définir, avec ledit miroir plan de sortie (24), lesdites cavités instables (38) de couplage de deux cavités stables (36) voisines.

6. Laser, **caractérisé en ce qu'**il comprend un oscillateur laser (28) à cavités multiples selon l'une quelconque des revendications 1 ou 2 et un milieu amplificateur disposé dans ledit oscillateur (28).

7. Laser selon la revendication 6, **caractérisé en ce que** le milieux amplificateur est un mélange de gaz, notamment du gaz $CO_2$, disposé entre deux électrodes en forme de plaque (3,5), parallèles à ladite rangée de cavités (36, 38) et séparées d'un intervalle (h) prédéfini pour former un guide d'onde pour les modes laser se propageant dans le milieu amplificateur.

8. Laser selon la revendication 6, **caractérisé en ce que** le milieu amplificateur est un solide, notamment une tranche sensiblement rectangle d'une matrice cristalline contenant un dopant laser et dont les grandes faces forment pour les modes laser se propageant dans le milieu amplificateur un guide d'onde par réflexion totale.

**Patentansprüche**

1. Laser-Oszillator (28) mit mehreren Resonatoren, umfassend ein Reihe von mindestens zwei Resonatoren (36) mit parallelen Achsen, die in mindestens einer Ebene parallel zu den Achsen der Resonatoren der Reihe stabil sind, und Mittel (38) zur Lichtkopplung zwischen diesen mindestens zwei stabilen Resonatoren (36), wobei die Mittel zur Kopplung jeweils einen instabilen Resonator (38) umfassen, der zu den mindestens zwei stabilen Resonatoren (36) parallel ist und sich in der Reihe zwischen diesen befindet, wobei die stabilen und instabilen Resonatoren einen auskoppelnden Planspiegel (24) und einen Spiegel (20) umfassen, der im Wesentlichen vollständig reflektierend ist und auf seiner Seite (22) gegenüber dem auskoppelnden Planspiegel ein Muster von Spiegelelementen (30) hat, das einerseits aus vertieften Abschnitten (32) gebildet ist, die mit dem auskoppelnden Planspiegel (24) die Reihe der stabilen Resonatoren (36) bilden, und andererseits aus gewölbten Abschnitten (34), die sich jeweils zwischen zwei vertieften Abschnitten (32) befinden und mit dem auskoppelnden Planspiegel (24) die instabilen Resonatoren (38) zur Kopplung der zwei benachbarten stabilen Resonatoren (36) bilden, **dadurch gekennzeichnet, dass** zur Erzeugung eines Laserbündels (26) am Ausgang, dessen Amplitude im Wesentlichen die Summe von 2*N Lasergrundmoden mit transversalem Gauss-Profil ist, wobei 2*N die Anzahl der vertieften Abschnitte ist, das Muster von Spiegelelementen (30) in der Transversalrichtung ($\underline{X}$) der Reihe von Resonatoren (36, 38) ein Profil $\Delta$ aufweist, das durch die folgende Formel gegeben ist:

$$\Delta(x) = \frac{\lambda}{2\pi} * \phi(x)$$

wobei $\lambda$ die Wellenlänge des Lichts ist und $\phi(\chi)$ eine Phasenschwankung in Abhängigkeit von der Transversalrichtung $\chi$ des Spiegels (20) ist und aus der folgenden Gleichung hervorgeht:

$$A(x) = A_0 \sum_{j=1}^{N} \left[ \exp\left( -\frac{(x - jd/2)^2}{w^2} \right) \exp\left( -ik\frac{(x - jd/2)^2}{R} \right) + \exp\left( -\frac{(x + jd/2)^2}{w^2} \right) \exp\left( -ik\frac{(x + jd/2)^2}{R} \right) \right]$$

die eine komplexe Größe der Gleichung:

$$A(x) = A_0 B(x)\exp(-i\phi(x))$$

ist, wobei $A_o * B(\chi)$ das Modul ist und $\phi(\chi)$ die gewünschte Phase der komplexen Zahl $A(\chi)$ ist, j eine natürliche Zahl von 1 bis N ist, i die imaginäre Zahl ist, d der Abstand zwischen den Zentren der beiden benachbarten Lasergrundmoden mit Gauss-Profil ist und k die Wellenzahl k = $2\pi/\lambda$ ist,

$$w^2 = w_0^2 \left( 1 + \frac{L^2}{Z_R^2} \right)$$

$$R = L\left( 1 + \frac{Z_R^2}{L^2} \right)$$

wobei $w_o$ der Radius am Sattelpunkt der einen Lasergrundmode mit transversalem Gauss-Profil ist, L die Länge des Resonators ist und

$$Z_R = \frac{\pi w_0^2}{\lambda}$$

2. Laser-Oszillator mit mehreren Resonatoren nach Anspruch 1, **dadurch gekennzeichnet, dass** die gewölbten (34) und vertieften (36) Abschnitte eine zylindrische Form besitzen, wobei die Zylinderachsen senkrecht zu einer Ebene sind, die parallel zu den Achsen der stabilen Resonatoren (36) der Reihe ist.

3. Spiegel für einen Oszillator (28) nach einem der Ansprüche 1 und 2, wobei der Spiegel eine Seite (22) hat, die im Wesentlichen vollständig reflektierend ist und ein Muster von Spiegelelementen (30) aufweist, das einerseits aus vertieften Abschnitten (32) gebildet ist, die mit einem auskoppelnden Planspiegel (24) die Reihe der stabilen Resonatoren (36) bilden sollen, und andererseits aus gewölbten Abschnitten (34), die sich jeweils zwischen zwei vertieften Abschnitten (32) befinden und mit dem auskoppelnden Planspiegel (24) die instabilen Resonatoren (38) zur Kopplung der zwei benachbarten stabilen Resonatoren (36) bilden sollen, **dadurch gekennzeichnet, dass** zur Erzeugung mit einem Planspiegel (24), der 2*N Lasergrundmoden mit transversalem Gauss-Profil entspricht, wobei 2*N die Anzahl der vertieften Abschnitte ist, das eingravierte transversale Profil $\Delta$ des Musters der Spiegelelemente (30) durch die folgende Beziehung gegeben ist:

$$\Delta(x) = \frac{\lambda}{2\pi} * \phi(x)$$

wobei $\lambda$ die Wellenlänge des Lichts ist und $\phi(\chi)$ eine Phasenschwankung in Abhängigkeit von der Transversalrichtung $\chi$ des Spiegels (20) ist und aus der folgenden Gleichung hervorgeht:

$$A(x) = A_0 \sum_{j=1}^{N} \left[ \exp\left(-\frac{(x - jd/2)^2}{w^2}\right) \exp\left(-ik\frac{(x - jd/2)^2}{R}\right) + \exp\left(-\frac{(x + jd/2)^2}{w^2}\right) \exp\left(-ik\frac{(x + jd/2)^2}{R}\right) \right]$$

die eine komplexe Größe der Gleichung:

$$A(x) = A_0 B(x)\exp(-i\phi(x))$$

ist, wobei $A_o*B(\chi)$ das Modul ist und $\phi(\chi)$ die gewünschte Phase der komplexen Zahl $A(\chi)$ ist, j eine natürliche Zahl von 1 bis N ist, i die imaginäre Zahl ist, d der Abstand zwischen den Zentren der beiden benachbarten Lasergrundmoden mit Gauss-Profil ist und k die Wellenzahl k = $2\pi/\lambda$ ist,

$$w^2 = w_0^2\left(1 + \frac{L^2}{Z_R^2}\right)$$

$$R = L\left(1 + \frac{Z_R^2}{L^2}\right)$$

wobei $w_o$ der Radius am Sattelpunkt der einen Lasergrundmode mit transversalem Gauss-Profil ist, L die Länge des Resonators ist und

$$Z_R = \frac{\pi w_0^2}{\lambda}$$

**4.** Spiegel nach Anspruch 3, **dadurch gekennzeichnet, dass** die gewölbten (34) und vertieften (32) Abschnitte eine zylindrische Form haben, wobei die Zylinderachsen parallel sind.

**5.** Verfahren zur Herstellung eines Laserspiegels nach Anspruch 3, **dadurch gekennzeichnet, dass** in eine im Wesentlichen vollständig reflektierende Seite eines Planspiegels mit einem Ionenbündel gemäß dem Profil Δ das Muster der Spiegelelemente (30) graviert wird, das aus vertieften Abschnitten (32) gebildet ist, die mit einem auskoppelnden Planspiegel (24) die Reihe der stabilen Resonatoren (36) bilden sollen, und andererseits aus gewölbten Abschnitten (34), die sich jeweils zwischen zwei vertieften Abschnitten (32) befinden und mit dem auskoppelnden Planspiegel (24) die instabilen Resonatoren (38) zur Kopplung von zwei benachbarten stabilen Resonatoren (36) bilden sollen.

**6.** Laser, **dadurch gekennzeichnet, dass** er einen Laser-Oszillator (28) mit mehreren Resonatoren nach einem der Ansprüche 1 oder 2 und ein Verstärkungsmedium, das sich in dem Oszillator befindet, umfasst.

**7.** Laser nach Anspruch 6, **dadurch gekennzeichnet, dass** das Verstärkungsmedium ein Gasgemisch, insbesondere von $CO_2$-Gas, ist, das sich zwischen zwei Elektroden in Plattenform (3, 5) befindet, die zu der Reihe von Resonatoren (36, 38) parallel und durch einen vorbestimmten Abstand (h) getrennt sind, damit sie einen Wellenleiter für die sich im Verstärkungsmedium ausbreitenden Lasermoden bilden.

**8.** Laser nach Anspruch 6, **dadurch gekennzeichnet, dass** das Verstärkungsmedium ein Feststoff ist, insbesondere ein im Wesentlichen rechteckiges Stück eines kristallinen Materials, das ein Laser-Dotiermittel enthält und dessen große Seiten für die sich im Verstärkungsmedium ausbreitenden Lasermoden mittels Totalreflexion einen Wellenleiter bilden.

**Claims**

**1.** A laser oscillator (28) with multiple cavities, comprising a row of at least two cavities (36) with parallel axes and stable in at least one plane parallel to the axes of the cavities of the said row, and means (38) for coupling light between the said at least two stable cavities (36), the said coupling means each comprising an unstable cavity (38) parallel to the said at least two stable cavities (36) and located in the said row between these, the said stable and unstable cavities comprising a plane output mirror (24) and a substantially totally reflecting mirror (20) comprising on its face (22) facing the plane output mirror a pattern of mirror elements (30) formed for one part by hollow parts (32) defining with the said plane output mirror (24) the said row of stable cavities (36) and for the other part by convex parts (34) respectively disposed between two hollow parts (32) and defining with the said plane output mirror (24) the said unstable cavities (38) for coupling two adjacent stable cavities (36), **characterized in that** in order to generate a laser beam (26) at the output whose amplitude is substantially the sum of 2*N fundamental elementary laser modes with a Gaussian transverse profile, 2*N being the number of the said hollow parts, the said pattern of mirror elements (30) has a profile Δ in the said transverse direction ($\underline{X}$) of the row of cavities (36, 38) given by the following formula:

$$\Delta(x) = \frac{\lambda}{2\pi} * \phi(x)$$

where $\lambda$ is the wavelength of the light and $\varphi(x)$ is a phase variation as a function of the transverse direction x of the mirror (20) and is extracted from the following equation:

$$A(x) = A_0 \sum_{j=1}^{N} \left[ \exp\left( -\frac{(x - jd/2)^2}{\omega^2} \right) \exp\left( -ik\frac{(x - jd/2)^2}{R} \right) + \exp\left( -\frac{(x + jd/2)^2}{\omega^2} \right) \exp\left( -ik\frac{(x + jd/2)^2}{R} \right) \right]$$

which is a complex number of the form:

$$A(x) = A_0 B(x)\exp(-i\varphi(x))$$

where $A_0 * B(x)$ is the modulus and $\varphi(x)$ the phase sought for of this complex number $A(x)$, j is a natural number running from 1 to N, i is the imaginary number, d is the distance between the centres of two adjacent elementary laser modes of Gaussian profile and k is the wave number, $k = 2\pi/\lambda$,

$$\omega^2 = \omega_0^2\left(1 + \frac{L^2}{Z_R^2}\right)$$

$$R = L\left(1 + \frac{Z_R^2}{L^2}\right)$$

where $\omega_0$ is the waist ray of one of the elementary laser modes of transverse Gaussian profile, L being the length of the cavity and

$$Z_R = \frac{\pi w_0^2}{\lambda}\ .$$

2.  A multiple cavity laser according to claim 1, **characterized in that** the said convex parts (34) and hollow parts (32) have a cylindrical form, the axes of the cylinders being perpendicular to a plane parallel to the axes of the stable cavities (36) of the said row.

3.  A mirror for an oscillator (28) according to either of claims 1 and 2, the mirror comprising a substantially totally reflecting face (22) having a pattern of mirror elements (30) formed for one part by hollow parts (32) adapted to define with a plane output mirror (24) the said row of stable cavities (36) and for the other part convex parts (34) respectively disposed between two hollow parts (32) and adapted to define with the said plane output mirror (24) the said unstable cavities (38) for coupling two adjacent stable cavities (26), **characterized in that** in order to obtain with a corresponding plane mirror (24) 2*N fundamental elementary laser modes of Gaussian profile, 2*N being the number of the said hollow parts, the etched transverse profile Δ of the pattern of the mirror elements (30) is given by the following relation:

$$\Delta(x) = \frac{\lambda}{2\pi} * \phi(x)$$

where λ is the wavelength of the light and $\varphi(x)$ is a phase variation as a function of the transverse direction x of the mirror (20) and is extracted from the following equation:

$$A(x) = A_0 \sum_{j=1}^{N} \left[ \exp\left( -\frac{(x - jd/2)^2}{\omega^2} \right) \quad \exp\left( -ik\frac{(x - jd/2)^2}{R} \right) + \right.$$
$$\left. \exp\left( -\frac{(x + jd/2)^2}{\omega^2} \right) \quad \exp\left( -ik\frac{(x + jd/2)^2}{R} \right) \right]$$

which is a complex number of the form:

$$A(x) = A_0 B(x)\exp(-i\varphi(x))$$

where $A_0{}^*B(x)$ is the modulus and $\varphi(x)$ the phase sought for of this complex number $A(x)$, j is a natural number running from 1 to N, i is the imaginary number, d is the distance between the centres of two adjacent elementary laser modes of Gaussian profile and k is the wave number, $k = 2\pi/\lambda$,

$$\omega^2 = \omega_0^2\left( 1 + \frac{L^2}{Z_R^2} \right)$$

$$R = L\left( 1 + \frac{Z_R^2}{L^2} \right)$$

where $\omega_0$ is the waist ray of one of the elementary laser modes of transverse Gaussian profile, L being the length of the cavity and

$$Z_R = \frac{\pi w_0^2}{\lambda} \ .$$

4.  A mirror according to claim 3, **characterized in that** the said convex parts (34) and hollow parts (32) have a cylindrical form, the axes of the cylinders being parallel.

5.  A method of making a laser mirror according to claim 3, **characterized in that** the said pattern of mirror elements (30) formed of hollow parts (32) adapted to define with a plane output mirror (24) the said row of stable cavities (36) and for the other part of convex parts (34) respectively disposed between two hollow parts (32) and adapted to define with the said plane output mirror (24) the said unstable cavities (34) for coupling two adjacent stable cavities (36) is etched on a substantially totally reflecting face of a plane mirror by means of a beam of ions, in accordance with the said profile Δ.

6.  A laser, **characterized in that** it comprises a laser oscillator (28) with multiple cavities according to either claim 1 or 2 and an amplifying medium present in the said oscillator (28).

7.  A laser according to claim 6, **characterized in that** the amplifying medium is a mixture of gas, especially of the gas $CO_2$, present between two electrodes of plate form (3, 5) parallel to the said row of cavities (36, 38) and separated by a predefined space (h) to form a waveguide for the laser modes propagating in the amplifying medium.

**8.** A laser according to claim 6, **characterized in that** the amplifying medium is a solid, especially a substantially rectangular wafer of a crystalline matrix containing a laser dopant and of which the major faces form a waveguide by total reflection for the laser modes propagating in the amplifying medium.

FIG.1

EP 1 099 281 B1

FIG. 2

EP 1 099 281 B1

FIG.3

FIG.4

18

FIG.5

FIG.6